Europäisches Patentamt

European Patent Office

Office européen des brevets

(11) Numéro de publication: **0 153 217**
**A1**

(12) **DEMANDE DE BREVET EUROPEEN**

(21) Numéro de dépôt: **85400175.7**

(22) Date de dépôt: **01.02.85**

(51) Int. Cl.⁴: **A 01 G 31/02**

(30) Priorité: **17.02.84 FR 8402422**

(43) Date de publication de la demande: **28.08.85**
**Bulletin 85/35**

(84) Etats contractants désignés: **AT BE CH DE GB IT LI LU**
**NL SE**

(71) Demandeur: **SPIE-BATIGNOLLES (société anonyme),**
**Tour Anjou 33, Quai de Dion-Bouton, F-92814 Puteaux**
**(FR)**

(72) Inventeur: **Brochier, José, 14 rue du Château,**
**F-34160 Castries (FR)**
Inventeur: **Landon, Bruno, 3 rue de l'Eglise,**
**F-77870 Vulaines S/Seine (FR)**
Inventeur: **Noyer, Jean-Louis, Allée Mantelle Villevielle,**
**F-30250 Sommieres (FR)**
Inventeur: **Vanrenterghem, Jacques, 9 rue des Lilas,**
**F-92320 Chatillon (FR)**

(74) Mandataire: **Bouju, André, 38 Avenue de la Grande**
**Armée, F-75017 Paris (FR)**

(54) **Procédé et dispositif pour la culture intensive de plantes aquatiques.**

(57) Le dispositif comporte un bac (1) dans lequel est disposée une solution aqueuse nutritive (2) sur laquelle flottent
des plantes aquatiques (3) exposées au rayonnement solaire passant à travers une couverture (4).

Selon l'invention, on prévoit un détecteur (5) de l'énergie solaire relié à un moteur (12) pour entraîner les plantes (3) par l'intermédiaire d'un câble d'entraînement (7) et
d'éléments flottants (6) à une vitesse qui croît avec l'énergie
solaire reçue par les plantes.

1

0153217

"Procédé et dispositif pour la culture
intensive de plantes aquatiques"

La présente invention concerne un procédé et
un dispositif pour la culture intensive de plantes aquatiques, notamment des jacinthes d'eau.

Il est connu de réaliser la culture de plantes
aquatiques en disposant celles-ci dans un bac couvert,
formant serre, exposé au rayonnement solaire et contenant
une solution aqueuse nutritive dont l'élément nutritif
est renouvelé régulièrement afin de permettre une croissance des plantes aquatiques disposées dans le bac.

On sait par ailleurs que certaines plantes aquatiques, notamment la jacinthe d'eau, contiennent des
protéines qui peuvent servir à l'alimentation animale.
Toutefois, les plantes aquatiques contiennent généralement une très grande quantité d'eau et l'exploitation
des protéines qu'elles contiennent ne peut être envisagée
industriellement que s'il est procédé à une culture intensive.

Afin d'accélérer la croissance des plantes,
on a souvent proposé de soumettre celles-ci à un rayonnement artificiel approprié. Toutefois, l'utilisation
intensive de sources de rayonnement artificiel suppose
une installation coûteuse consommant une énergie importante, dont l'intérêt économique ne se justifie que dans
des cas particuliers.

Un but de la présente invention est de proposer
un procédé et un dispositif permettant une culture intensive des plantes aquatiques.

En vue d'atteindre ce but, on prévoit un procédé
pour la culture intensive de plantes aquatiques comportant
la mise en place de plantes que l'on désire faire croître
dans un bac couvert, exposé au rayonnement solaire et
contenant une solution aqueuse nutritive, procédé qui,
selon l'invention, comprend les étapes suivantes :

- on détecte l'énergie solaire 1 à laquelle
les plantes sont exposées,

- et on déplace les plantes dans le bac d'un
point de chargement de ces plantes vers un point de déchargement à une vitesse qui croît avec l'énergie solaire
reçue par les plantes.

Ainsi, on utilise au maximum l'énergie solaire
naturelle.

Selon une version avantageuse du procédé selon
l'invention, on effectue au moins une tonte des feuilles
des plantes entre le point de chargement des plantes
et leur point de déchargement.

La tonte de feuilles déjà largement développées
permet l'accès à la lumière solaire des feuilles sous-jacentes
et on a constaté que le rendement global de chaque plante,
c'est à dire le poids de matière végétale produit par chaque plante
pendant sa croissance, se trouve ainsi amélioré.

Selon un autre aspect du procédé selon l'invention,
on effectue le chargement des plantes par prélèvement
dans une pépinière en communication avec le bac.

Ainsi, la densité initiale des plantes dans la
zone de chargement est obtenue avec une manipulation minime.

Pour la mise en oeuvre du procédé selon l'invention, on prévoit un dispositif pour la culture intensive
de plantes aquatiques comportant un bac contenant une
solution nutritive, une couverture disposée au-dessus
du bac formant serre, et laissant passer le rayonnement
solaire, ce dispositif comportant, selon l'invention,
un détecteur de l'énergie solaire à laquelle les plantes
sont exposées et des moyens pour faire avancer les plantes
d'un point de chargement de ces plantes vers un point
de déchargement à une vitesse qui croît avec l'énergie
solaire reçue par les plantes.

Ainsi, la position des plantes est déterminée
en contrôlant la vitesse à laquelle les moyens pour faire avancer les plantes sont déplacés en fonction de l'énergie solaire reçue.

Selon une version avantageuse du dispositif selon l'invention, les moyens pour faire avancer les plantes comprennent des éléments flottants à la surface du bac reliés à des câbles d'entraînement mobiles le long des bords longitudinaux du bac. Ainsi, lorsque les éléments flottants sont déplacés par les câbles d'entraînement, les plantes aquatiques se trouvent elles-mêmes déplacées sur une même distance.

Selon une réalisation particulière, les éléments flottants sont des tubes fermés à leurs extrémités. Ainsi, ils flottent par eux-mêmes à la surface de la solution nutritive et il n'est pas nécessaire de prévoir des moyens annexes pour assurer leur flottabilité.

Selon un autre aspect de l'invention, le dispositif comporte un organe de tonte mobile au-dessus du bac. Ainsi, une tonte des feuilles des plantes est effectuée en un point quelconque du bac.

Selon une version préférée de l'invention, le bac est allongé et comporte à l'une de ses extrémités une partie formant une pépinière adjacente au point de chargement et dont les parois latérales sont divergentes vers le bac. Ainsi, lors de la reproduction des plantes, celles-ci se déplacent automatiquement vers le bac et le chargement d'une quantité initiale de plantes aquatiques est obtenu en déposant simplement un élément flottant à la surface du bac.

D'autres caractéristiques et avantages de l'invention résulteront encore de la description ci-après d'un exemple non limitatif en référence aux dessins annexés dans lesquels :

- la figure 1 est une vue en perspective schématique d'une partie du dispositif selon l'invention ;

- la figure 2 est une vue en coupe transversale d'un dispositif selon l'invention, selon le plan II-II de la figure 3 ;

- la figure 3 est une vue en coupe longitudinale partielle du dispositif selon l'invention, selon le plan III-III de la figure 2 ;

- la figure 4 est une vue de dessus partielle du dispositif selon l'invention ;

- la figure 5 est un diagramme schématique montrant la croissance d'une plante aquatique en fonction du temps.

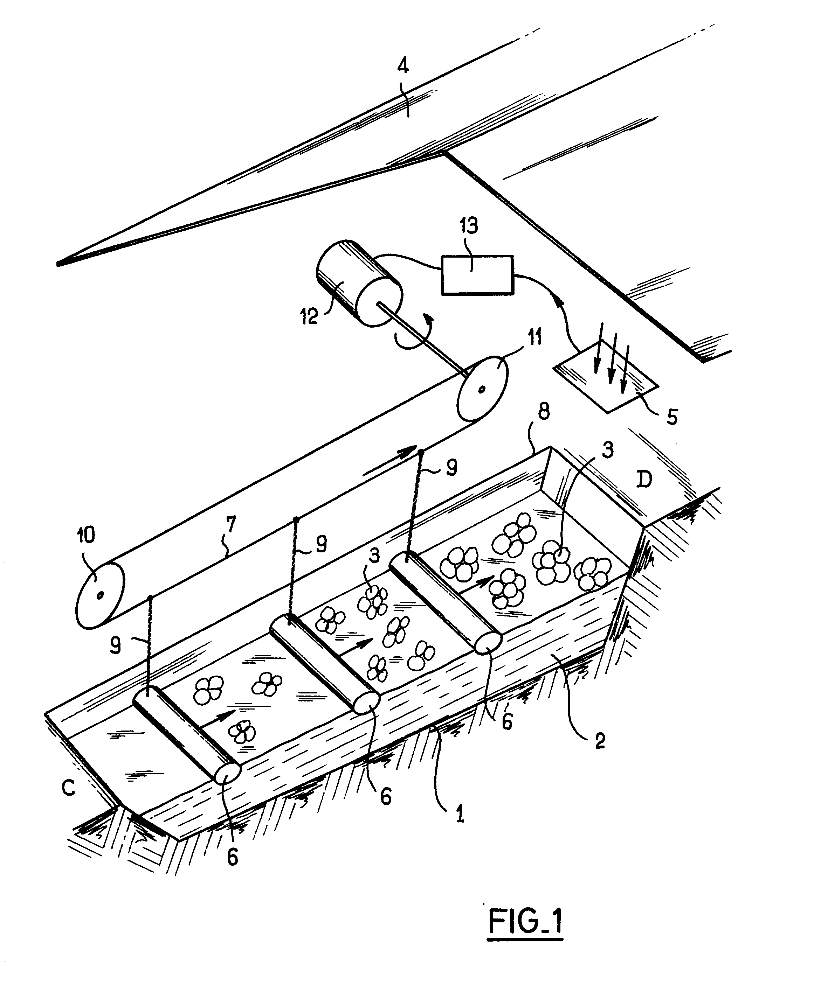

En se reportant à la figure 1, le dispositif pour la culture intensive de plantes aquatiques telles que des jacinthes comporte un bac 1 contenant une solution nutritive 2 sur laquelle flottent des plantes aquatiques 3. Une couverture 4 est disposée au-dessus du bac 1, pour former une serre et laisser passer le rayonnement solaire. Un détecteur 5 de l'énergie solaire à laquelle les plantes 3 sont exposées est disposé au voisinage du bac 1 et est relié à des moyens pour faire avancer les plantes. Ces moyens pour faire avancer les plantes 3 comprennent des éléments 6 tubulaires flottant à la surface du bac et reliés à des câbles d'entraînement 7 se déplaçant le long des bords longitudinaux 8 du bac au moyen d'organes de liaison 9 fixés à l'une de leurs extrémités sur les câbles d'entraînement 7 et dont l'autre extrémité est fixée à une extrémité d'un élément flottant 6. Les éléments flottants 6 s'étendent parallèlement les uns aux autres sur toute la largeur du bac 1 et sont régulièrement espacés. Les plantes 3 se situent entre ces éléments 6.

Les câbles d'entraînement 7 sont portés par des roues 10 et 11. La roue 10 est montée libre sur son axe, tandis que la roue 11 est entraînée par un moteur 12 commandé par une unité de contrôle 13 reliée au capteur solaire 5.

Ainsi, lors de la commande par l'unité de contrôle 13, les éléments flottants 6 sont entraînés par l'intermédiaire du moteur 12, des câbles d'entraînement 7 et des organes de liaison 9 et poussent dans leur mouvement les plantes 3 d'un point de chargement C des plantes vers un point de déchargement D à une vitesse qui est fonction croissante de l'énergie solaire reçue par les plantes 3.

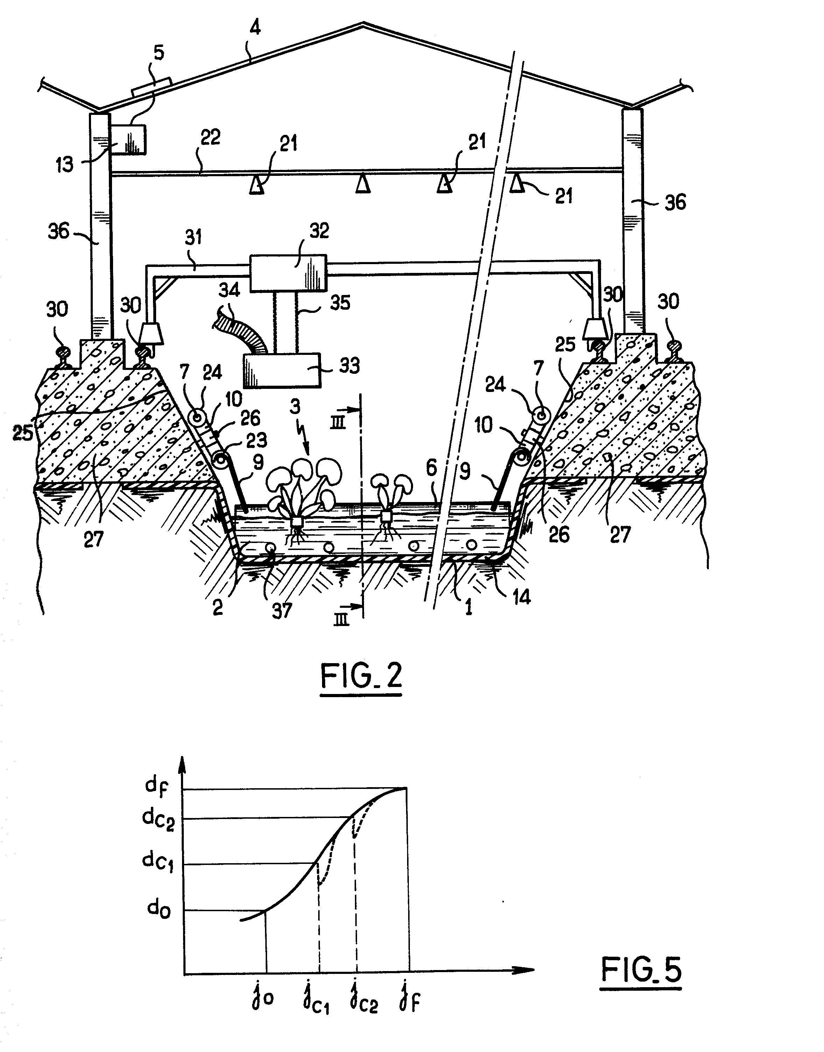

Les figures 2 à 4 illustrent de façon plus détaillée un exemple particulier de réalisation du dispositif selon l'invention.

Des références identiques ont été utilisées pour les éléments identiques à ceux de la figure 1.

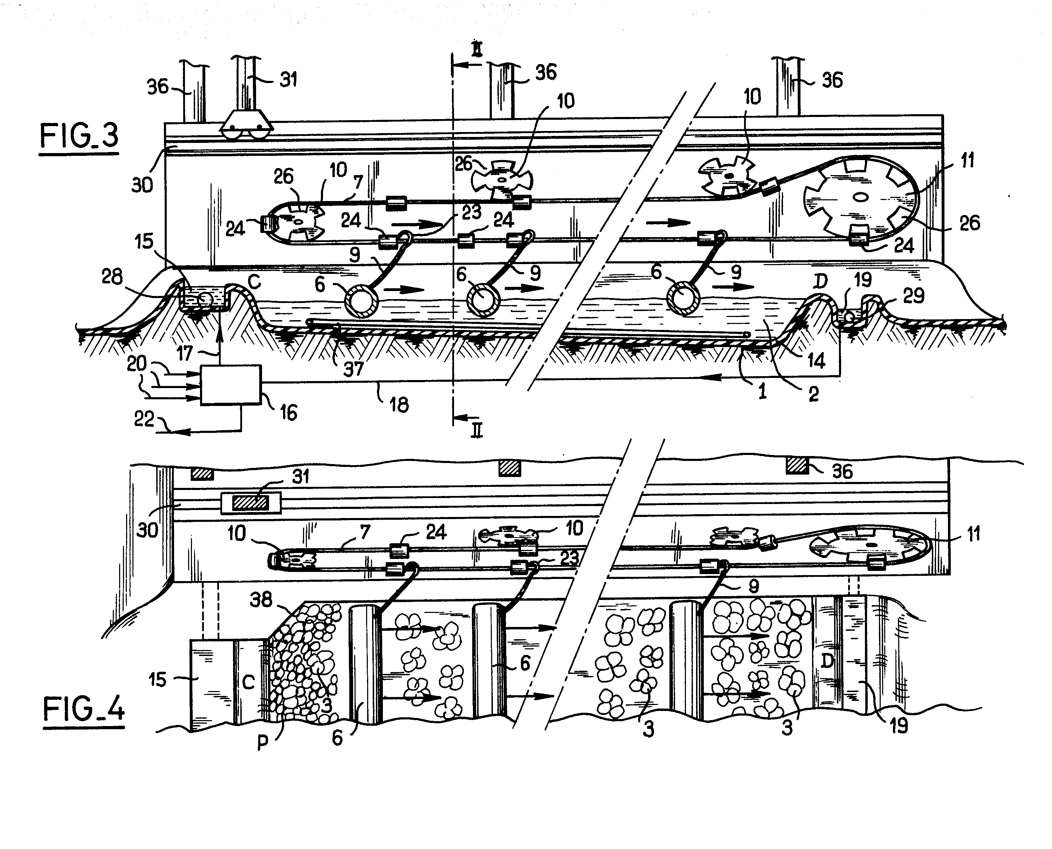

On voit ainsi que le bac 1 se présente sous forme d'une fosse sensiblement rectangulaire en vue de dessus, creusée dans le sol et recouverte d'un film protecteur imperméable 14. Le bac 1 est alimenté en solution nutritive par un canal d'alimentation 15, (figures 3 et 4) s'étendant transversalement au bac 1 à l'extrémité de chargement C de celui-ci et raccordé à un dispositif mélangeur 16 par une canalisation 17. Le dispositif mélangeur 16 reçoit par une canalisation 18 une solution nutritive appauvrie, recueillie par déversement dans un canal de récupération 19 s'étendant également transversalement au bac 1 au voisinage du point de déchargement D. Le dispositif mélangeur 16 reçoit également des éléments régénérateurs de la solution nutritive sous forme concentrée par des canalisations 20. Le mélange nutritif régénéré, par exemple une solution du type décrit dans l'ouvrage intitulé "cultures hydroponiques" de Christiane Le Saint et Yves Coïc édité par La Maison Rustique, collection Techniques d'avenir, est acheminé par une pompe de relevage incluse dans le dispositif mélangeur 16 vers le canal d'alimentation 15 par l'intermédiaire de la canalisation 17 et vers des buses d'aspersion 21 (voir figure 2) montées au-dessus du bac 1 et alimentées par une canalisation 22. Ces buses d'aspersion 21 servent d'une façon connue en soi pour l'arrosage des feuilles, la régulation de la température de l'atmosphère dans la serre et la lutte contre les parasites portés par les plantes.

Sur les figures 2 à 4, les organes de liaison 9 reliant les éléments flottants 6 au câble d'entraînement 7 sont eux-mêmes des câbles comportant à leur extrémité supérieure un crochet 23 coopérant avec une butée formée par un manchon 24 serti sur le câble d'entraînement 7 de sorte que les éléments flottants (6) sont disposés sensiblement parallèlement entre eux entre les bords (8) opposés du bac (1) transversalement à leur direction de déplacement.

Dans la variante de réalisation représentée, plusieurs roues libres 10 sont montées sur une paroi latérale inclinée 25 de part et d'autre du bac 1, chaque roue libre 10 comportant des créneaux 26 dont la position coincide avec celle des manchons 24 sur le câble d'entraînement 7 lorsque celui-ci est entraîné par la roue 11 comportant également des créneaux 26. Les manchons 24 ont donc une double fonction, à savoir une fonction de butée pour les crochets 23 des organes de liaison 9 des éléments flottants 6, et une fonction anti-dérapante du câble d'entraînement 7 sur la roue d'entraînement 11 lors de la rotation de celle-ci. Ainsi qu'il a été vu à propos de la figure 1, la roue d'entraînement 11 est entraînée par un moteur 12, par exemple un moteur hydraulique qui permet d'obtenir un couple important, même à basse vitesse, ce qui permet d'entraîner les éléments flottants 6, réalisés par exemple sous forme de tubes fermés à leurs extrémités, ainsi que les plantes 3 qui viennent en appui sur les éléments flottants 6, lors de l'avance de ceux-ci.

Les parois latérales 25 sont de préférence les flancs d'un massif en béton 27, séparant deux bacs adjacents dont les canaux d'alimentation et de récupération 19 sont respectivement raccordés aux canaux correspondants de bacs adjacents par des canalisations de raccordement 28 et 29 (voir figure 3).

Sur leur partie supérieure, les massifs en béton 27 portent des rails 30 s'étendant parallèlement au bord longitudinal de chaque bac 1. Les rails 30 supportent un pont roulant 31 qui, dans l'exemple représenté, supporte un chariot 32 auquel un organe de tonte 33 comportant un élément d'évacuation 34, est raccordé, au moyen de câbles 35 de longueur réglable. L'organe de tonte 33 est d'un type quelconque, par exemple, du type comportant deux lames hélicoïdales tournant dans des directions opposées et reliées à un dispositif d'évacuation des parties coupées.

A leur partie supérieure, les massifs en béton 27 comportent également des poteaux verticaux 36 supportant la couverture 4 de la serre.

Dans le fond du bac 1, un tube échangeur de chaleur 37 est disposé en zig zag et est raccordé à une source de chaleur, par exemple un circuit d'eau chauffée par des rejets thermiques industriels, et sert à réchauffer l'eau du bac, lorsque la température de celle-ci s'abaisse de façon indésirable.

On va maintenant décrire le fonctionnement du dispositif que l'on vient de décrire et en même temps le procédé selon l'invention.

Un premier élément flottant 6 est mis en place à la surface du bac 1, par exemple au moyen du pont roulant 31 équipé de façon appropriée et les crochets 23 sont mis en butée contre un manchon 24 à proximité de l'extrémité de chargement C. Des plantes aquatiques 3 sont disposées sur la surface de la solution nutritive 2, entre le point de chargement C et le premier élément flottant 6 disposé dans le bac, suivant une densité $d_o$ (poids des plantes par unité de surface). Un deuxième élément flottant 6 est alors disposé à proximité du point de chargement C pour délimiter entre les deux éléments flottants 6 une zone dans laquelle les plantes ont la densité $d_o$. On détecte alors au moyen du capteur 5 l'énergie solaire à laquelle les plantes 3 sont exposées et on déplace les plantes dans le bac 1 à une vitesse qui croît avec l'énergie solaire reçue par les plantes, soit d'une façon directe en entraînant les éléments flottants 6 au moyen d'un moteur dont la vitesse est proportionnelle à l'énergie solaire instantannée captée par le détecteur 5 soit, selon une réalisation préférée, en mémorisant les valeurs de l'énergie solaire instantannée prélevées à des intervalles réguliers et en effectuant, par exemple quotidiennement, dans l'unité de contrôle 13 une intégration de l'énergie solaire emmagasinée dans la journée qui sert à la commande du moyen d'entraînement de la roue 11. Bien entendu, la distance dont les plantes 3 sont déplacées en fonction de l'énergie solaire reçue dépend de chaque type de plante.

Lorsque les éléments flottants 6 ont avancé d'une distance égale à l'intervalle moyen entre deux éléments flottants 6, un nouveau chargement de plantes 3 est effectué au voisinage du point de chargement, afin de remplir la zone préalablement inoccupée selon une densité $d_o$, l'avance des éléments flottants 6 étant par ailleurs déterminée pour qu'une zone atteignant le point de déchargement D soit couverte de plantes suivant une densité $d_f$ pour laquelle la zone concernée est sensiblement couverte de plantes.

Lorsqu'une zone atteint le point de déchargement D, l'élément flottant 6 à l'avant de cette zone est retiré du bac et ramené au point de chargement C pour une utilisation ultérieure, les plantes 3 sont recueillies et traitées selon l'utilisation désirée.

A titre d'exemple, les réalisations suivantes ont été effectuées dans un bassin de 300 mètres de long et de 10 mètres de large :

- Pour une période où l'ensoleillement variait entre 600 et 1 000 joules/cm2-jour une densité initiale $d_o$ de 5 kg de poids frais par m2 a été mise en place et un avancement moyen de 10 mètres par jour a été effectué. Au bout de 30 jours, les plantes ont été récoltées et présentaient sur la surface de récolte une densité $d_f$ de 12 kg de poids frais par m2.

- Pour une période où l'ensoleillement variait entre 1 000 et 2 000 joules/cm2-jour, une densité initiale $d_o$ de 7,5 kg/m2 a été mise en place et un avancement moyen de 12 mètres par jour a été effectué. Au bout de 25 jours, les plantes ont été récoltées et présentaient une densité de 25 kg/m2.

- Pour une période où l'ensoleillement variait de 2 000 à 3 000 joules/cm2-jour, une densité initiale $d_o$ de 10 kg/m2 a été mise en place et un avancement moyen de 15 mètres par jour a été effectué. Au bout de 20 jours, les plantes ont été récoltées et présentaient une densité $d_f$ de 30 kg/m2.

Dans le cas de plantes qui se reproduisent par stolon, comme la jacinthe d'eau, la densité initiale $d_0$ des plantes peut être obtenue automatiquement en prévoyant une pépinière P adjacente à l'extrémité de chargement C du bac 1. Dans ce cas en effèt, en se reproduisant, les plantes 3 s'appuient sur la berge extrême du bac et se repoussent d'elles-mêmes vers la partie libre du bac, de sorte que pour sélectionner le nombre désiré de plantes 3, il suffit de déposer un élément flottant 6 à la distance voulue de l'élément flottant précédent en incluant dans la zone ainsi déterminée la quantité désirée de plantes 3.

Selon une réalisation préférée de l'invention, le mouvement spontané des plantes est accentué en réalisant à l'extrémité de chargement des parois latérales divergentes 38 (figure 4) qui délimitent ainsi une pépinière P en communication avec le bac 1.

Par ailleurs, lorsqu'il est constaté que des feuilles fortement développées masquent la lumière pour des feuilles moins développées, on prévoit selon l'invention d'effectuer une tonte des feuilles les plus développées des plantes 3. Le résultat de cette tonte est constaté sur le diagramme de la figure 5 où l'on a représenté la courbe de croissance moyenne des plantes 3 en portant en ordonnée la densité, c'est-à-dire le poids de matière végétale par $m^2$ et en abscisse le temps exprimé en jours.

On a représenté en trait plein la courbe de croissance sans tonte et en traits pointillés les modifications de cette courbe pour une tonte effectuée au jour $j_{c1}$ et au jour $j_{c2}$. On constate à ce propos qu'au moment de la tonte, la densité diminue fortement en raison du poids des feuilles enlevées, mais l'accès à la lumière des feuilles de faible croissance leur permet de croître rapidement, de sorte qu'après quelques jours, la zone considérée retrouve sensiblement la densité qu'elle aurait eue sans tonte. En plus de la récolte normale, la tonte a donc permis de recueillir le poids des feuilles tondues qui, en outre, présentent l'avantage de contenir un taux de protéines plus élevé que le reste de la plante.

La présente invention n'est pas limitée aux modes de réalisation décrits ci-dessus et on peut y apporter des variantes d'exécution.

Ainsi, les crochets 23 disposés à l'extrémité des organes de liaison 9 peuvent être remplacés par des pinces du type de celles fixant une perche de téléski sur son câble porteur.

L'alimentation du bac par des canaux 15 peut être remplacée par une alimentation par des rampes percées disposées dans le fond du bac.

Des dispositions complémentaires peuvent être prévues. Par exemple, on peut prévoir d'injecter du gaz carbonique dans l'atmosphère de la serre.

La couverture de la serre peut avoir toute forme désirée ; en particulier, la forme de chapelle représentée sur la figure 2 peut être remplacée par une couverture en tunnel.

REVENDICATIONS

1. Procédé pour la culture intensive de plantes aquatiques (3) comportant la mise en place de plantes (3) que l'on désire faire croître dans un bac (1) couvert exposé au rayonnement solaire et contenant une solution aqueuse nutritive (2) caractérisé en ce qu'il comprend les étapes suivantes :

- on détecte l'énergie solaire à laquelle les plantes (3) sont exposées,

- on déplace les plantes dans le bac d'un point de chargement (C) de ces plantes vers un point de déchargement (D) à une vitesse qui est une fonction croissante de l'énergie solaire reçue par les plantes.

2. Procédé conforme à la revendication 1, caractérisé en ce qu'on effectue au moins une tonte des feuilles des plantes (3) entre le point de chargement (C) des plantes et leur point de déchargement (D).

3. Procédé conforme à la revendication 1 caractérisé en ce qu'on effectue le chargement des plantes par prélèvement dans une pépinière (P) en communication avec le bac (1).

4. Dispositif pour la culture intensive de plantes aquatiques (3) comportant un bac (1) contenant une solution nutritive (2), une couverture (4) disposée au-dessus du bac et laissant passer le rayonnement solaire, caractérisé en ce qu'il comporte un détecteur (5) de l'énergie solaire à laquelle les plantes (3) sont exposées et des moyens (6, 7, 11) pour faire avancer les plantes d'un point de chargement (C) de ces plantes vers un point de déchargement (D) à une vitesse qui croît avec l'énergie solaire reçue par les plantes (3).

5. Dispositif conforme à la revendication 4, caractérisé en ce que les moyens pour faire avancer les plantes comprennent des éléments flottants (6) à la surface de la solution nutritive (2) reliés à des câbles d'entraine- ment (7) mobiles le long des bords longitudinaux (8) du bac (1).

0153217

6. Dispositif conforme à la revendication 5 caractérisé en ce que les éléments flottants (6) sont des tubes (6) fermés à leurs extrémités.

7. Dispositif conforme à la revendication 5 ou à la revendication 6 caractérisé en ce que les éléments flottants (6) sont fixés aux câbles d'entraînement (7) par des crochets (23) s'engageant avec des butées (24) portées par les câbles d'entraînement (7).

8. Dispositif selon l'une des revendications 5 à 7 caractérisé en ce que les éléments flottants (6) sont disposés sensiblement parallèlement entre eux entre les bords (8) opposés du bac (1) transversalement à leur direction de déplacement.

9. Dispositif conforme à la revendication 4 caractérisé en ce qu'il comporte un organe de tonte (33) mobile au-dessus du bac.

10. Dispositif conforme à la revendication 4, caractérisé en ce que le bac comporte une partie (P) formant une pépinière adjacente au point de chargement (C).

11. Dispositif conforme à la revendication 10, caractérisé en ce que le bac (1) est allongé et en ce que la partie (P) formant pépinière est prévue à une extrémité du bac (1) et comporte des parois latérales (38) divergentes vers le bac (1).

FIG.1

0153217

0153217

FIG. 2

FIG. 5

0153217

FIG.3

FIG.4

# 0153217

Numéro de la demande

**Office européen des brevets**

## RAPPORT DE RECHERCHE EUROPEENNE

EP  85  40  0175

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 324 224  (THE BRITISH PETROLEUM COMP. LTD.) | | A 01 G  31/02 |
| A | FR-A-2 361 060  (THE BRITISH PETROLEUM COMP. LTD.) | | |
| A | US-A-3 579 907  (GRAVES) | | |
| A | GB-A-2 026 831  (GENERAL MILLS INC.) | | |
| | ----- | | |

|  | DOMAINES TECHNIQUES RECHERCHES (Int. Cl.4) |
|---|---|
| | A 01 G |

Le présent rapport de recherche a été établi pour toutes les revendications

| Lieu de la recherche | Date d'achèvement de la recherche | Examinateur |
|---|---|---|
| LA HAYE | 01-04-1985 | VERDOODT S.J.M. |